# EUROPÄISCHE PATENTANMELDUNG

(11) **EP 4 144 507 A1**
(43) Veröffentlichungstag der Anmeldung: **08.03.2023**
(21) Anmeldenummer: 22191129.0
(22) Anmeldetag: 19.08.2022
(51) Int. Cl.: B29C 64/118, B29C 64/209, B29C 64/295, B33Y 30/00, B33Y 80/00, B22F 10/00

(54) **TEMPERIER- UND ÜBERFÜHRUNGSEINRICHTUNG FÜR EINEN 3D-DRUCKER, ZUR ÜBERFÜHRUNG MINDESTENS EINES KUNSTSTOFFFILAMENTS VON EINEM FESTEN ZUSTAND IN EIN AUFGESCHMOLZENES, ZÄHFLÜSSIGES DRUCKMATERIAL**

(30) Priorität: 03.09.2021 DE 102021209755
(71) Anmelder: Krause DiMaTec GmbH, 33649 Bielefeld (DE)
(72) Erfinder: Lücking, Christian, 33619 Bielefeld (DE); Tschöke, Philipp, 33605 Bielefeld (DE); Zantop, Dennis, 32832 Augustdorf (DE); Tominski, Johannes, 33184 Altenbeken (DE); Pagel, Karsten, 32052 Herford (DE); Rohde, Johannes, 33098 Paderborn (DE)
(74) Vertreter: Rau, Schneck & Hübner Patentanwälte Rechtsanwälte PartGmbB

(57) **Zusammenfassung**

Eine Temperier- und Überführungseinrichtung (3) für einen 3D-Drucker dient zur Überführung mindestens eines Kunststofffilaments von einem festen Zustand in ein aufgeschmolzenes, zähflüssiges Druckmaterial. Eine Druckdüse der Temperier- und Überführungseinrichtung (3) dient zum Abgeben des Druckmaterials. Ein Grundkörper (6) der Temperier- und Überführungseinrichtung (3) hat mindestens zwei Einlasskanal-Anschlüsse (4, 5) zum Zuführen von pro Einlass-Kanal (4, 5) jeweils einem Kunststofffilament. Zum Abgeben des Druckmaterials hin zur Druckdüse (8) dient mindestens ein Auslasskanal (15, 16). Der Grundkörper (6) hat weiterhin eine Heizaufnahme (13) für eine Heizeinheit. Ein Schmelzvolumen (SV1 + SV2) im Grundkörper (6), in dem im Betrieb der Einrichtung (3) mittels der Heizeinheit aufgeschmolzenes Druckmaterial vorliegt, ist kleiner als 60 mm³. Es resultiert eine Temperier- und Überführungseinrichtung, bei der eine möglichst einfache Handhabung beim Wechsel zwischen verschiedenen, der Filamentführung dienenden Kanälen möglich ist.

## Beschreibung

Der Inhalt der deutschen Patentanmeldung DE 10 2021 209 755.3 wird durch Bezugnahme hierin aufgenommen.

Die Erfindung betrifft eine Temperier- und Überführungseinrichtung für einen 3D-Drucker, zur Überführung mindestens eines Kunststofffilaments von einem festen Zustand in ein aufgeschmolzenes, zähflüssiges Druckmaterial. Ferner betrifft die Erfindung einen 3D-Drucker mit einer derartigen Einrichtung und ein Kunststoff-Bauteil, hergestellt mit einem derartigen 3D-Drucker.

Derartige Temperier- und Überführungseinrichtungen sind für 3D-Drucker als Hotends bekannt (vgl. beispielsweise den Wikipedia-Eintrag "Prusa i3", abrufbar am 07.08.2021). Die CN 204 566 689 U offenbart einen Mehrfarben-3D-Drucker mit genau einer Düse (single nozzle). Die CN 205 310 843 U offenbart eine Düse mit zwei Führungskanälen, die bis zu einem Auslass getrennt verlaufen. Die CN 205 326 302 U offenbart eine Düse mit einem Vereinigungsabschnitt, in dem sich zwei Einlasskanäle zu einem Auslasskanal vereinigen. Die CN 205 951 287 U offenbart einen Zweifarben-Druckkopf für einen 3D-Drucker.

Wenn derartige Einrichtungen mehr als einen Einlasskanal aufweisen, also die Möglichkeit beinhalten, zwischen verschiedenen Einlasskanälen zu wechseln, ist ein derartiger Wechsel entweder aufwändig und/oder es erfolgt ein unerwünschtes Vermischen von aufgeschmolzenem Druckmaterial und/oder Druckmaterial, das an sich nicht aufgeschmolzen werden soll, sondern über einen anderen Kanal genutzt werden soll, wird unerwünscht aufgeschmolzen.

Es ist daher eine Aufgabe der vorliegenden Erfindung, eine Temperier- und Überführungseinrichtung zu schaffen, bei der eine möglichst einfache Handhabung beim Wechsel zwischen verschiedenen, der Filamentführung dienenden Kanälen möglich ist.

Diese Aufgabe ist erfindungsgemäß gelöst durch eine Temperier- und Überführungseinrichtung mit den im Anspruch 1 angegebenen Merkmalen.

Erfindungsgemäß wurde erkannt, dass ein Schmelzvolumen im Grundkörper der Einrichtung, das kleiner ist als 60 mm³ zu einer vorteilhaft geringen Vermischung von über die beiden Einlasskanal-Anschlüsse zugeführtem Kunststofffilament-Material führt. Dies erleichtert einen Wechsel zwischen den Einlasskanälen. Das Schmelzvolumen im Grundkörper kann kleiner sein als 40 mm³ und kann auch kleiner sein als 35 mm³.

Filament- bzw. Kunststoff-Führungskanäle zwischen dem jeweiligen Einlasskanal-Anschluss und dem mindestens einen Auslasskanal können sich im Grundkörper vereinigen, so dass dann genau ein Auslasskanal vorliegt. Alternativ können die Führungskanäle getrennt bis zur Druckdüse verlaufen, wobei dann dort eine Kanalvereinigung stattfindet.

Eine lösbar mit dem Grundkörper verbundene Druckdüse nach Anspruch 2 ermöglicht einen Düsentausch, z.B. zur Vorgabe verschiedener Düsen-Austrittsdurchmesser. Auch eine Reinigung der Einrichtung ist dann erleichtert.

Wenn der Grundkörper nach Anspruch 3 mehrere Auslasskanäle aufweist, kann erreicht werden, dass Führungskanäle innerhalb des Grundkörpers, die von den mindestens zwei Einlasskanal-Anschlüssen weiterführen, vollständig getrennt voneinander vorliegen. Eine Kanalvereinigung kann dann innerhalb der Druckdüse stattfinden, die ein vom Grundkörper separates Bauteil darstellt. Im Grundkörper liegt dann keine Mischkavität vor, so dass eine unerwünschte Vermischung von über die mindestens zwei Einlasskanal-Anschlüsse zugeführten Kunststofffilament-Materialien vermieden werden kann.

Querschnittsverhältnisse nach Anspruch 4 erlauben es, das jeweilige Kunststofffilament im unaufgeschmolzenen Zustand leichtgängig bis zum Schmelzvolumen zu transportieren. Auch ein etwaiges Rückziehen des Kunststofffilaments ist dann vereinfacht.

Dies gilt insbesondere auch für Querschnittsverhältnisse nach Anspruch 5. Die Kanalabschnitte können insbesondere ohne sprunghaften Richtungswechsel und insbesondere ohne 90°-Umlenkungen verlaufen. Auch durch diese Maßnahme wird ein leichtgängiger Transport des Kunststoffmaterials durch die Kanäle gewährleistet. Die Kanalabschnitte können sich in Bereichen längs des Kanalwegs im Schmelzvolumen im Querschnitt streng monoton verjüngen. Derartige Bereiche streng monotoner Verjüngung der Kanalabschnitte können separat voneinander verlaufende Bereiche der verschiedenen Kanalabschnitte sein.

Eine vertikale Auslasskanalabschnittsanordnung nach Anspruch 6 vermeidet ein Zurückfließen aufgeschmolzenen Filaments in den jeweils nicht verwendeten Auslasskanalabschnitt, so dass auch dort keine unerwünschte Durchmischung stattfindet.

Eine 3D-Druckfertigung des Grundkörpers der Einrichtung nach Anspruch 7 ermöglicht insbesondere eine optimierte Gestaltung der Kunststofffilament-Führungskanäle und/oder eine Optimierung eines erwünschten Wärmeübergangs zwischen der Heizeinheit und dem Schmelzvolumen. Zudem kann erreicht werden, dass die Einlasskanal-Anschlüsse mit hohem Temperaturgefälle zum Schmelzvolumen vorliegen, was wiederum Anforderungen an eine Kühlung eines Druckkopfes, aufweisend die Temperierungs- und Überführungseinrichtung, erleichtert.

Ein Grundkörpermaterial nach Anspruch 8 hat sich als besonders geeignet herausgestellt. Insbesondere lässt sich Aluminium gut fertigen und hat eine gute Wärmeleitung. Grundsätzlich kann der Grundkörper aus einem anderen Material gefertigt sein.

Eine Sensoraufnahme nach Anspruch 9 erleichtert eine Ankopplung des Temperaturfühlers.

Die Vorteile eines 3D-Druckers nach Anspruch 10 entsprechen denen, die vorstehend unter Bezugnahme auf die Temperierungs- und Überführungseinrichtung bereits erläutert wurden. Entsprechendes gilt für die Vorteile des mit einem derartigen 3D-Druckers hergestellten Kunststoff-Bauteils.

Ein Ausführungsbeispiel der Erfindung wird nachfolgend anhand der Zeichnung näher erläutert. In dieser zeigen:
- Fig. 1: Hauptkomponenten eines 3D-Druckers im Bereich eines Drucckopfes, zu dem eine Temperier- und Überführungseinrichtung zur Überführung eines Kunststofffilamentes in ein aufgeschmolzenes Druckmaterial gehört, die auch als Hotend bezeichnet wird;
- Fig. 2: eine perspektivische Ansicht des Hotends;
- Fig. 3: eine Ansicht auf das Hotend von unten mit Blickrichtung auf zwei druckdüsenseitige Auslasskanäle, gesehen aus Richtung III in Fig. 2;
- Fig. 4: einen Schnitt gemäß Linie IV-IV in Fig. 3.

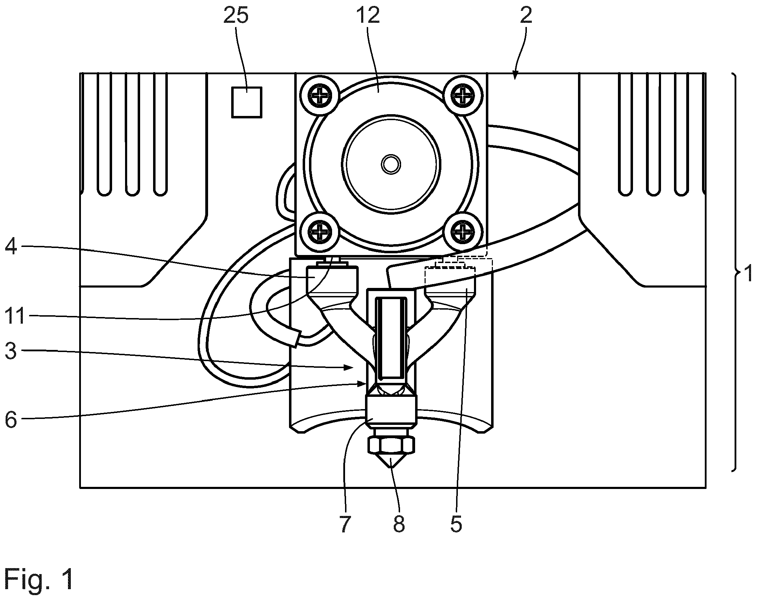

Fig. 1 zeigt einen Druck-Düsenkopf bzw. Druckkopf 1 eines ansonsten praktisch nicht dargestellten 3D-Druckers 2.

Der Druckkopf 1 hat eine Temperier- und Überführungseinrichtung 3 zur Überführung mindestens eines Kunststofffilaments von einem festen Zustand in ein aufgeschmolzenes, zähflüssiges Druckmaterial. Eine derartige Temperier- und Überführungseinrichtung wird auch als Hotend bezeichnet.

Das Hotend 3 dient in der Ausführung nach Fig. 1 zur Überführung von zwei Kunststofffilamenten von einem jeweils festen Zustand in ein aufgeschmolzenes, zähflüssiges Druckmaterial, wobei zwischen den beiden Kunststofffilamenten ausgewählt werden kann. Dies kann einerseits zu einem Materialwechsel genutzt werden, falls ein Kunststoff-Bauteil aus unterschiedlichen Kunststofftypen gefertigt werden soll, oder auch zum nahtlosen 3D-Drucken, wobei während dem Wechsel eines Kunststofffilaments mit Hilfe des anderen Kunststofffilamentes gedruckt wird. Unterschiedliche Filamenttypen können dabei unterschiedliche Kunststoffmaterialien, unterschiedliche Materialqualitäten oder auch unterschiedliche Materialfarben aufweisen.

Die Kunststofffilamente sind in der Zeichnung nicht dargestellt und werden zwei Einlass-Kanalanschlüssen 4, 5 eines Grundkörpers 6 des Hotends 3 zugeführt. Die Einlasskanäle münden über Filament-Führungskanäle im Grundkörper 6 und einen Auslasskanalabschnitt 7 des Grundkörpers 6 in eine Druckdüse 8. Die Druckdüse 8 stellt eine mit dem Grundkörper 6 des Hotends 3 lösbar verbindbare Komponente dar. Die Druckdüse 8 dient zum Abgeben des Druckmaterials beim 3D-Drucken.

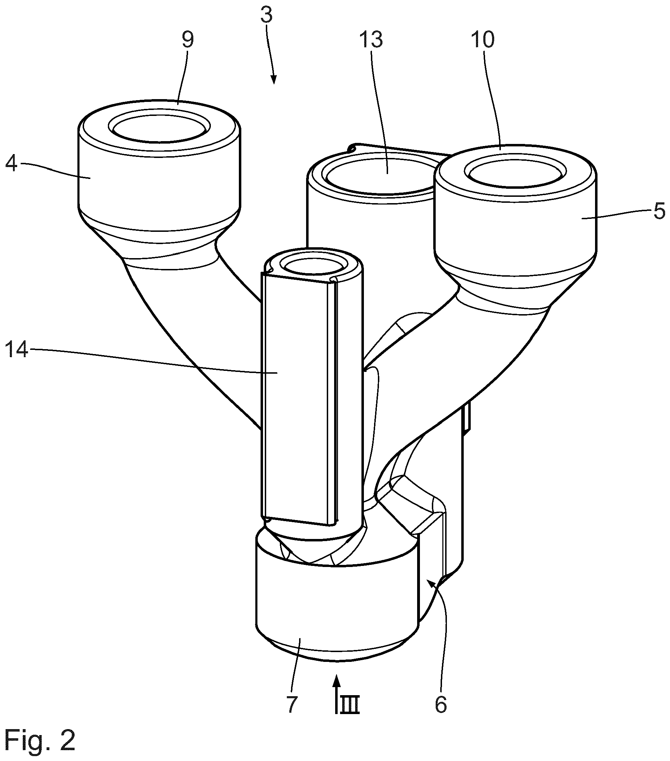

Fig. 2 zeigt Details des Hotends 3. Stirnwände 9, 10 der Einlasskanäle 4, 5 stellen Anschlusspunkte für eine Wärmeleitungs-Unterbrechungskomponente 11 (vgl. Fig. 1) des Düsenkopfes 1 dar, die auch als Heatbreak bezeichnet ist und über die eine weitgehende thermische Entkopplung des Hotends 3 zu stromaufwärts liegenden Kunststofffilament-Führungskomponenten erfolgt.

Stromaufwärts des Hotends 3 ist weiterhin ein Kühlkörper 12 (vgl. Fig. 1) des Druckkopfes 1 angeordnet, der über einen Lüfter aktiv gekühlt sein kann.

Der Grundkörper 6 des Hotends 3 hat weiterhin eine Heizaufnahme 13 für eine in der Fig. 1 nicht sichtbare Heizeinheit in Form einer Heizpatrone. Weiterhin hat der Grundkörper 6 eine Sensoraufnahme 14 für einen Temperaturfühler, der in der Figur ebenfalls nicht dargestellt ist.

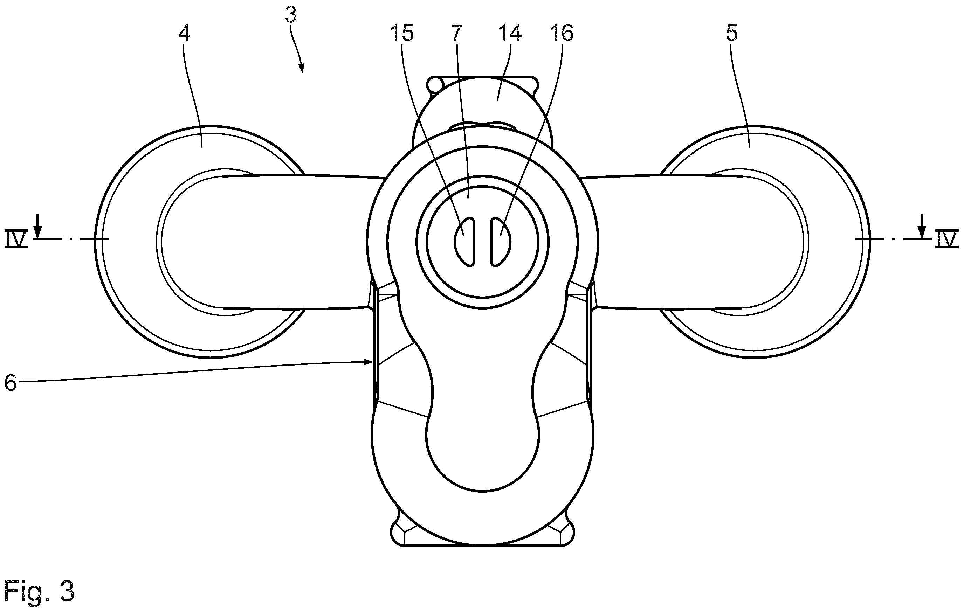

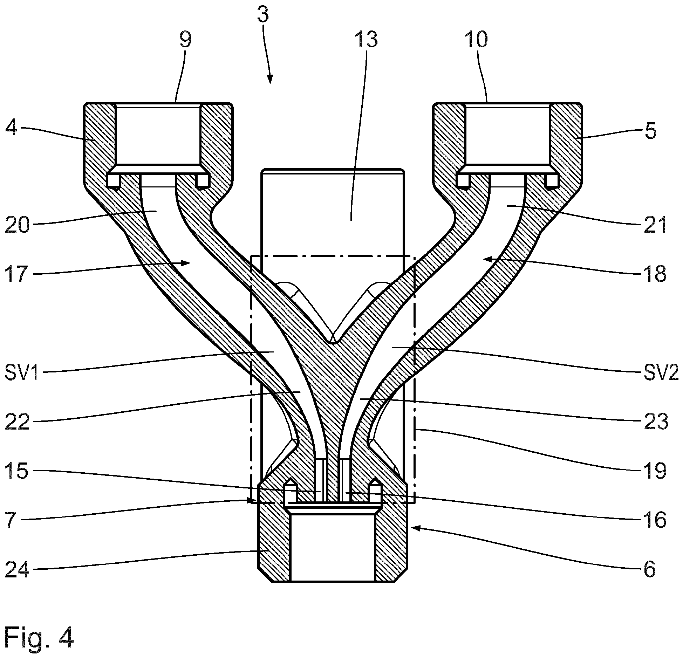

Ein Kanalverlauf zwischen den Einlasskanal-Anschlüssen 4, 5 und dem Auslasskanalabschnitt 7 des Grundkörpers 6 ist aus den Fig. 3 und 4 ersichtlich. Jedem der beiden Einlasskanal-Anschlüsse 4, 5 ist ein Auslasskanal 15, 16 zugeordnet, der mit dem jeweiligen Einlasskanal-Anschluss 4, 5 in Fluidverbindung steht, so dass zwei voneinander getrennte Kunststoff-Führungskanäle 17, 18 im Grundkörper 6 resultieren. Die beiden Auslasskanäle 15, 16 vereinigen sich also nicht im Grundkörper 6, sondern erst im weiteren Kanalverlauf in der Druckdüse 8. Entsprechend liegt kein gemeinsamer Kanal für die Filamente im Grundkörper 6 des Hotends 3 vor.

Fig. 4 zeigt hervorgehoben einen Schmelzbereich 19 des Grundkörpers 6 des Hotends 3. In den Kanalabschnitten der Kunststoff-Führungskanäle 17, 18, die sich im Schmelzbereich 19 befinden, liegt im Betrieb des Hotends 3 mittels der Heizeinheit in der Heizaufnahme 13 aufgeschmolzenes Druckmaterial vor. Die beiden Kunststoff-Führungskanäle 17, 18 haben in den Abschnitten, die im Schmelzbereich 19 vorliegen, insgesamt ein Schmelzvolumen SV1 + SV2, das kleiner ist als 60 mm³.

Die Schmelzvolumina SV1 und SV2 sind stromaufwärts der Kunststoff-Führungskanäle 17, 18 begrenzt durch Bereiche, in denen eine direkte Ankopplung dieser Führungskanäle 17, 18 an die Heizaufnahme 13 vorliegt. Stromabwärts sind die Schmelzvolumina SV1, SV2 der Führungskanäle 17, 18 durch den jeweiligen Austritt hin zur Druckdüse 8 begrenzt. Tatsächlich ist das gesamte Schmelzvolumen SV1 + SV2 bei der Hotend-Ausführung nach Fig. 4 33,4 mm³, ist also kleiner als 50 mm³ und auch kleiner als 40 mm³.

Zwischen dem jeweiligen Einlasskanal-Anschluss 4, 5 und dem Beginn des Schmelzbereichs 19 haben Kanalabschnitte 20, 21 der Kunststoff-Führungskanäle 17, 18 einen konstanten Querschnitt. Innerhalb des Schmelzbereichs 19, also im jeweiligen Schmelzvolumen SV1, SV2, verjüngen sich anschließende Kanalabschnitte 22, 23 der Kunststoff-Führungskanäle 17, 18 im Querschnitt stetig.

Im Kanalabschnitt 20, 21 kann ein Kanaldurchmesser im Bereich zwischen 1,80 mm und 2,0 mm vorliegen. Der Kanaldurchmesser kann insbesondere 1,85 mm betragen. Im Bereich der Auslasskanalabschnitte 15, 16 kann ein Kanaldurchmesser im Bereich zwischen 0,5 mm und 0,8 mm vorliegen. Der Kanaldurchmesser kann dort insbesondere 0,7 mm betragen.

Zwischen den Einlasskanal-Anschlüssen 4, 5 und den Auslasskanälen 15, 16 verlaufen die Kunststoff-Führungskanäle 17, 18 ohne sprunghaften Richtungswechsel und haben insbesondere keine 90°-Umlenkung.

Die Auslasskanalabschnitte, über die die Auslasskanäle 15, 16 in die Druckdüse 8 einmünden, sind in einer Betriebsstellung des Hotends 3 vertikal angeordnet.

Der Grundkörper 6 des Hotends 3 ist insgesamt im 3D-Druck gefertigt. Der Grundkörper 6 des Hotends 3 ist aus Aluminium gefertigt.

Der Temperaturfühler in der Sensoraufnahme 14 dient im Betrieb zur Überwachung einer Temperatur des Druckmaterials im Bereich einer Druckdüsen-Aufnahme 24 für die Druckdüse 8.

Beim 3D-Drucken mit dem 3D-Drucker 2 wird zunächst ausgewählt, mit welchen Typen Kunststofffilament die beiden Einlasskanal-Anschlüsse 4, 5 bestückt werden. Über eine zentrale Steuereinrichtung 25 wird der 3D-Drucker in Betrieb gesetzt und die Heizeinheit heizt, überwacht über den Temperaturfühler, den Schmelzbereich 19 auf, bis das zum Einsatz kommende Kunststofffilament im Schmelzvolumen SV1 bzw. SV2 als aufgeschmolzenes, zähflüssiges Druckmaterial vorliegt. Der 3D-Drucker 2 ist nun einsatzbereit und es kann, wie üblich, mit Hilfe einer xyz-Relativverlagerungs-Steuerung zwischen dem Düsenkopf 1 und einem Träger für das herzustellende Kunststoff-Bauteil, das Kunststoff-Bauteil schichtweise gedruckt werden.

Über eine entsprechende Filament-Zuführung kann gesteuert werden, über welchen Führungskanal 17, 18 eine Kunststofffilament-Zuführung hin zur Druckdüse 8 erfolgt. Aufgrund des sehr kleinen gesamten Schmelzvolumens SV1 + SV2 ist für den Fall, dass bei dem Führungskanal-Wechsel tatsächlich auch ein Materialwechsel erfolgt, nur ein geringes Totvolumen vorhanden, welches gegebenenfalls nicht zum Bauteil-Aufbau genutzt werden kann.

Der nicht verwendete Filamentstrang kann aufgrund der Kanalabschnitte 20, 21 mit konstantem Querschnitt zurückgezogen werden, um ein unerwünschtes Aufschmelzen zu verhindern.

Ein Temperaturunterschied zwischen der Druckdüsen-Aufnahme 24 des Grundkörpers 6 einerseits und den Stirnwänden 9, 10 der Einlasskanal-Anschlüsse 4, 5 kann im Bereich von 100° C liegen.

## Patentansprüche

1. Temperier- und Überführungseinrichtung (3) für einen 3D-Drucker (2), zur Überführung mindestens eines Kunststofffilaments von einem festen Zustand in ein aufgeschmolzenes, zähflüssiges Druckmaterial,
- mit einer Druckdüse (8) zum Abgeben des Druckmaterials,
- mit einem Grundkörper (6),
-- mit mindestens zwei Einlasskanal-Anschlüssen (4, 5) zum Zuführen von pro Einlasskanal-Anschluss (4, 5) jeweils einem Kunststofffilament,
-- mit mindestens einem Auslasskanal (15, 16) zum Abgeben des Druckmaterials hin zur Druckdüse (8),
-- mit einer Heizaufnahme (13) für eine Heizeinheit,
- wobei ein Schmelzvolumen (SV1 + SV2) im Grundkörper (6), in dem im Betrieb der Einrichtung (3) mittels der Heizeinheit aufgeschmolzenes Druckmaterial vorliegt, kleiner ist als 60 mm³.

2. Einrichtung nach Anspruch 1, **dadurch gekennzeichnet, dass** die Druckdüse (8) eine mit dem Grundkörper (6) lösbar verbindbare Komponente darstellt.

3. Einrichtung nach Anspruch 1 oder 2, **dadurch gekennzeichnet, dass** der Grundkörper (6) mindestens zwei Auslasskanäle (15, 16) aufweist, die sich in der Druckdüse (8) vereinigen.

4. Einrichtung nach einem der Ansprüche 1 bis 3, **dadurch gekennzeichnet, dass** Kanalabschnitte (20, 21) zur Kunststofffilament-Führung ab den Einlasskanal-Anschlüssen (4, 5) bis zum Schmelzvolumen (SV1, SV2) einen konstanten Querschnitt aufweisen.

5. Einrichtung nach einem der Ansprüche 1 bis 4, **dadurch gekennzeichnet, dass** sich Kanalabschnitte zur Kunststofffilament-Führung längs eines Kanalweges im Schmelzvolumen (SV1 + SV2) im Querschnitt stetig verjüngen.

6. Einrichtung nach einem der Ansprüche 1 bis 5, **dadurch gekennzeichnet, dass** der mindestens eine Auslasskanalabschnitt, über den der mindestens eine Auslasskanal (15, 16) in die Druckdüse (8) einmündet, in einer Betriebsstellung der Einrichtung (3) vertikal angeordnet ist.

7. Einrichtung nach einem der Ansprüche 1 bis 6, **dadurch gekennzeichnet, dass** der Grundkörper (6) durch 3D-Druck gefertigt ist.

8. Einrichtung nach einem der Ansprüche 1 bis 7, **dadurch gekennzeichnet, dass** der Grundkörper (6) aus Aluminium gefertigt ist.

9. Einrichtung nach einem der Ansprüche 1 bis 8, **dadurch gekennzeichnet, dass** der Grundkörper (6) eine Sensoraufnahme (14) für einen Temperaturfühler aufweist.

10. 3D-Drucker (2) mit einer Einrichtung (3) nach einem der Ansprüche 1 bis 9.

11. Kunststoff-Bauteil, hergestellt mit einem 3D-Drucker (2) nach Anspruch 10.
